# EUROPEAN PATENT APPLICATION

(11) **EP 1 350 775 A2**
(43) Date of publication of application: **08.10.2003**
(21) Application number: 03007519.6
(22) Date of filing: 01.04.2003
(51) Int. Cl.: C04B 24/32, C04B 24/02, C04B 24/12

(54) **Admixture composition for hydraulic material**

(30) Priority: 03.04.2002 JP 2002101607
(71) Applicant: Nippon Shokubai Co., Ltd., Osaka-shi, Osaka 541-0043 (JP)
(72) Inventor: Masanaga, Mari, Suita-shi, Osaka 564-0061 (JP); Hirata, Tsuyoshi, Kobe-shi, Hyogo 655-0004 (JP)
(74) Representative: Luderschmidt, Schüler & Partner GbR

(57) **Abstract**

The present invention provids an admixture composition for hydraulic material that is capable of enabling minute air to be entrained into a hydraulic material composition and imparting an excellent the freeze/thaw durability to the hydraulic material. The object of the present invention is accomplished by an admixture composition for hydraulic material which contains component (A) and component (B) as essential components. The component (A) is a polyoxyalkylene polymer possessing a side chain containing a carboxyl group and the component (B) is a compound which is represented by the general formula (B-1) or (B-2).

HO―(WO)ₚ―H (B-1)

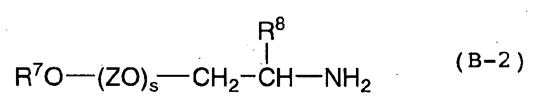

## Description

### BACKGROUND OF THE INVENTION

### Field of the Invention:

The present invention relates to an admixture composition for hydraulic material. More particularly, the present invention relates to an admixture composition for hydraulic material which entrains minute air into the composition of a hydraulic material such as cement paste, mortar, or concrete and induces formation of a hardened mass excellent in the freeze/thaw durability.

### Description of the Related Art:

The hydraulic material is widely used in cement compositions such as cement paste, mortar, and concrete because it is capable of forming a hardened mass excellent in such properties as strength and durability. The hydraulic material is an indispensable element in the construction of civil engineering works and buildings. Usually, an admixture for hydraulic material is added to such a hydraulic material to improve the air entraining property and the fluidity. In recent years, the importance of this admixture for hydraulic material has been winning recognition and the technical innovations, which are directed toward the admixture for hydraulic material, have been performed enthusiastically. The effects to be expected of the addition of the admixture for hydraulic material include securing satisfactory dispersibility due to the water reduction in the cement composition, enhancing strength due to the water reduction in the cement composition, and enhancing durability due to the shrinkage reducing property on drying, for example.

In these admixtures for hydraulic material, particularly many of polycarboxylic acid type cement admixtures have been considered for feasibility of technical innovation.

These polycarboxylic acid type admixtures, however, are disposed to entrain coarse air and these coarse air are apt to escape from concrete. They are, therefore, at a disadvantage in greatly varying the air content in concrete with the elapse of time and consequently rendering the adjustment of air content difficult. They further have the problem of impairing their freeze/thaw durability because they don't easily allow stable inclusion of minute air in the concrete. To cope with this problem, a method of using both a defoaming agent and an air-entraining agent is adapted to entrain minute air of fine quality into a hardened mass to heighten the freeze/thaw durability (refer, for example, to U.S. Patent No. 4,948,429 and JP-A-2001-294466).

It is however difficult to entrain minute air into the concrete using a polycarboxylic acid type admixture in spite of the combined use of a defoaming agent and an air-entraining agent, and the improvement of the concrete in the freeze/thaw durability is not fully satisfactory. An admixture, which can entrain minute air into the concrete and enhancing the freeze/thaw durability, therefore, has remained yet to be perfected by a further study.

The present invention, which has been initiated in view of this state, is aimed at providing an admixture for hydraulic material which is capable of inducing entrainment of minute air into a hydraulic material composition and imparting the freeze/thaw durability.

### SUMMARY OF THE INVENTION

In the light of this state, the inventors have thoroughly surveyed such problems as have confronted admixtures for hydraulic material which are widely usable in the field of civil engineering and construction and have pursued a diligent study on the outcome of the survey. They have consequently unveiled the fact that the combination of a polycarboxylic acid type admixture possessing a specific structure with a prescribed compound allows stable entrainment of air into a hydraulic material composition. They have further found that even when the single use of this admixtures entails shortage in the air content, the combined use thereof with an air-entraining agent can effect easy and stable entrainment of minute air into the hydraulic material composition and improve the freeze/thaw durability of the hydraulic material composition. The present inventors have perfected the present invention on the basis of the discovery of the dramatic effects mentioned above.

To be specific, the present invention is an admixture composition for hydraulic material, which contains component (A) and component (B) as essential components.
Component (A): A polyoxyalkylene polymer possessing a side chain containing a carboxylic group
Component (B): A compound represented by the general formula (B-1) or (B-2)

   HO-(WO)ₚ-H (B-1)

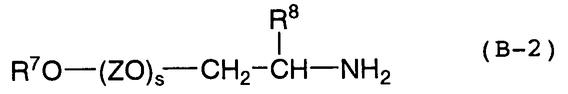

   [wherein WO denotes an oxyalkylene group comprising an oxyethylene (EO) and a oxypropylene (PO) at an EO/PO molar ratio in the range of 95/5 - 5/95, p denotes a numeral in the range of 15 - 200, ZO denotes an oxyalkylene group comprising an oxyethylene (EO) and an oxypropylene (PO) at an EO/PO molar ratio in the range of 95/5 - 0/100, R⁷ and R⁸ identically denote a hydrogen atom or an alkyl group having 1 - 3 carbon atoms, and s denotes a numeral in the range of 5 - 200.]
   Further, the present invention is an admixture composition for hydraulic material, which contains component (C) and component (D) as essential components.
Component (C): At least one polymer selected from the group consisting of (c-1) a polymer with a structure having one oxyalkylene chain possessing a side chain containing a carboxylic group linked to the residue of a compound having 2 - 30 carbon atoms and possessing one active hydrogen atom, (c-2) a polymer with a structure having at least one oxyalkylene chain possessing a side chain containing a carboxyl group linked to the residue of a compound having 4 - 30 carbon atoms and possessing two active hydrogen atoms, (c-3) a polymer with a structure having at least one oxyalkylene chain possessing a side chain containing a carboxyl group linked to the residue of a compound having 1 - 30 carbon atoms and possessing 3 or more active hydrogen atoms, and (c-4) a polymer with a structure having at least one oxyalkylene chain possessing a side chain containing a carboxylic group linked to the residue of an amine.
Component (D): A compound represented by the following general formula (B-3). 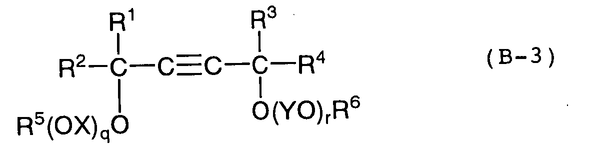 [wherein R¹ - R⁶ identically denote a hydrogen atom or an alkyl group having 1 - 10 carbon atoms, X and Y identically denote an alkylene group having 2 - 5 carbon atoms, and q and r independently denote a numeral in the range of 0 - 20.]
   By using the admixture composition of the present invention for hydraulic material, it is made possible to entrain air of fine quality into a hydraulic material composition and produce a hardened mass excellent in the freeze/thaw durability. Further, since the composition has a fine shrinkage reducing property on drying, the hardened mass can acquire enhanced durability.

### DETAILED DESCRIPTION OF THE INVENTION

The first aspect of the present invention is an admixture composition for hydraulic material, which contains component (A) and component (B) as essential components. By using such an admixture together, minute air of fine quality can be entrained into the hydraulic material, and excellent freeze/thaw durability can be given effectively.

The second aspect of the present invention is an admixture composition for hydraulic material, which contains component (C) and component (D) as essential components. By using such an admixture together, minute air of fine quality can also be entrained into the hydraulic material, and excellent freeze/thaw durability can be given effectively.

The following description applies basically equally to the first and the second aspect of the present invention except for the explanation of the components (A) - (D). The following description, therefore, first treats of components (A) - (D) sequentially in the order mentioned.

Component (A) is a polyoxyalkylene polymer which possesses a side chain containing a carboxyl group. The polyoxyalkylene polymers may be used either singly or in the form of a mixture of two or more members. When two or more polyoxyalkylene polymers are used in combination, the weight proportions of the component polyoxyalkylene polymers in the mixture is not particularly restricted.

Component (B) is a compound which is represented by the general formula (B-1) or (B-2). The admixture composition for hydraulic material may or may not contain other components.

This admixture composition for hydraulic material materializes entrainment of minute air of fine quality into the hydraulic material, and results in imparting excellent freeze/thaw durability to the hydraulic material composition. The hardened mass, therefore, can be improved in strength and durability.

The polyoxyalkylene polymer possessing a side chain containing a carboxyl group has such a structure as comprises an oxyalkylene chain serving as a main chain and a side chain containing a carboxyl group and linked to the main chain. As concrete examples of this polyoxyalkylene polymer, (A-1) polymers with a structure having one or more oxyalkylene chain possessing a side chain containing a carboxylic group linked to the residue of a compound having 1 - 30 carbon atoms and possessing one or more active hydrogen atom and (A-2) polymers with a structure having one or more oxyalkylene chain possessing a side chain containing a carboxyl group linked to the residue of an amine may be cited. Among the polymers cited above, polymers with a structure having one oxyalkylene chain possessing a side chain containing a carboxylic acid linked to the residue of a compound having 2 - 30 carbon atoms and possessing one active hydrogen atom, polymers with a structure having one or more oxyalkylene chain possessing a side chain containing a carboxylic group linked to the residue of a compound having 4 - 30 carbon atoms and possessing two active hydrogen atoms, polymers with a structure having at least one oxyalkylene chain possessing a side chain containing a carboxyl group linked to the residue of a compound having 1 - 30 carbon atoms and possessing 3 or more active hydrogen atoms, and polymers (A-2) are preferably used.

The term "residue of a compound possessing active hydrogen atom" as used in the description of polymers (A-1) and (A-2) means the group with a structure having active hydrogen excluded from the compound possessing the active hydrogen. It is not particularly restricted to the group formed by the reaction with the compound possessing the active hydrogen. As an example of the groups, the alcohol residues with a structure having active hydrogen excluded from the hydroxide group of alcohol prove particularly advantageous. As other example, the carboxylic acid residues with a structure having active hydrogen excluded from the carboxyl group of a carboxylic acid may be cited. As other examples of the compound possessing active hydrogen, the compounds possessing one, two, three or more active hydrogen atoms may be cited. The term "amine residue" which is used in the polymer (A-2) means a group with a structure having hydrogen atoms excluded from the substituent on the nitrogen atom of amine or a group with a structure excluding the hydrogen atom on the nitrogen atom of ammonia or amine. This term, however, is not particularly restricted to the group formed by the reaction with ammonia or amine.

In the polymers (A-1) and (A-2) (hereinafter referred to as "polymer component"), the oxyalkylene chain possessing a side chain containing a carboxyl group is not particularly restricted. The polymer can contain one or more oxyalkylene chains. Preferably, the polyoxyalkylene polymer possessing a side chain containing a carboxyl group contains a repeating unit represented by the following general formula (1). 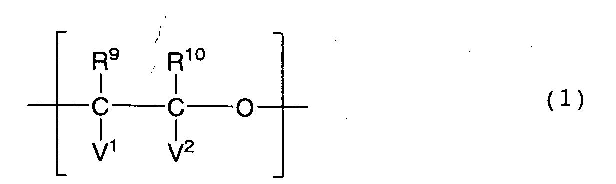 (wherein R⁹ and R¹⁰ independently denote a hydrogen atom, a hydrocarbon group having 1 - 18 carbon atoms, or a side chain containing a carboxyl group and V¹ and V² independently denote a hydrogen atom or a side chain containing a carboxyl group). The repeating unit essentially possesses a side chain containing a carboxylic group. Some other repeating unit may or may not be contained. For example, polyoxyalkylene polymer may contain an oxyethylene type-repeating unit, which doesn't have a side chain containing a carboxylic group. As described hereinafter, in the case of graft polymerizing a monomer containing a carboxylic group to a polyether compound, a side chain possessing a carboxylic group in a part of the repeating unit is combined. A polyoxyalkylene polymer containing at least one repeating unit represented by the general formula (1) is embraced in the scope of "containing a repeating unit represented by the general formula (1)". The symbols, R⁹ and R¹⁰, mentioned above are preferred to be such that either of them denotes a hydrogen atom and the other denotes a hydrogen atom or a hydrocarbon group having 1 - 18 carbon atoms.

The polymer component is composed of an oxyalkylene chain linked to the residue of a compound comprising a specific number of carbon atoms and possessing active carbon and/or the residue of amine and a side chain containing a carboxyl group. The side chain containing a carboxyl group has a structure formed by the polymerization of an ethylenically unsaturated monomer component containing an unsaturated carboxylic acid type monomer. This polymer can be produced by graft polymerizing an ethylenically unsaturated monomer component having an unsaturated carboxylic acid type monomer as an essential component to a polyether compound as described below. The polymer having the unsaturated carboxylic acid type monomer graft polymerized to the polyether compound contains a carboxyl group in a side chain. It is thought that the hardened mass may manifest various properties such as the water reducibility and shrinkage reducing property on drying because the carboxyl group is adsorbed to the hydraulic material or chelated to the cation present on the surface of the hydraulic material or the liquated cation by an ionically acting force, though generated only feebly.

The polymer component is not particularly restricted in hydrophilicity or hydrophobicity so long as it can manifest the function and effect of the present invention. If the hydrophobicity is unduly large, however, the excess will possibly result in decreasing the air content and rendering the adjustment of air content difficult. If the hydrophilicity is unduly large, the excess will possibly result in aggravating it difficult to the entrainment of air and rendering the adjustment of air content to a proper level. The adjustment of the hydrophilicity and the hydrophobicity of the polymer can be effected, for example, by properly setting the structure of an oxyalkylene chain.

The weight average molecular weight (Mw) of the polymer component is not particularly restricted. The weight average molecular weight (Mw) determined by the gel permeation chromatography (hereinafter referred to as "GPC") is preferably in the range of 200 - 1000000, more preferably 500 - 500000, and still more preferably 500 - 100000. The degree of dispersion (Mw/Mn) is not particularly restricted. For example, it is preferred to be in the range of 1.1 - 100, more preferably 1.2 - 80, and still more preferably 1.2 - 50. The term "degree of dispersion" of the polymer component refers to the numerical value obtained by dividing the weight average molecular weight (Mw) by the number average molecular weight (Mn).

The term "molecular weight" as used in the present specification refers to the numerical value determined by the gel permeation chromatography (GPC), for example. The gel permeation chromatography (GPC) is effected during the preparation of a calibration curve using commercially available polyethylene glycol as the standard sample by approximating the magnitudes found by measurement in the range of 1000 to 100000 at least in accordance with the cubic polynomial and adopting such a formula of approximation as has a coefficient of correlation (r) of preferably not less than 0.99, more preferably not less than 0.999, and still more preferably not less than 0.9999. The substance that dissolves the sample is selected as the mobile phase. The calibration curve is preferably drawn by using as many standard samples as permissible to ensure exact calculation of molecular weights. It is commendable for this purpose to use 5 or more standard samples. In order to secure reliability of the molecular weights measured, the standard sample having a molecular weight of less than 1500 and the standard sample having a molecular weight of more than 150,000 are used as standard sample.

As a method for producing the polymer component, the method for production which comprises a step of graft polymerizing an ethylenically unsaturated monomer component containing an unsaturated carboxylic acid type monomer as an essential component to a polyether compound can be used. By this method, the polymer component with the function and effect of the present invention can be easily produced. Now, the methods for producing the ethylenically unsaturated monomer component, polyether compound, and polymer respectively will be described in detail below.

[Ethylenically unsaturated monomer component] The unsaturated carboxylic acid type monomer in the ethylenically unsaturated monomer component is a monomer having at least one polymerizing unsaturated bond and at least one carboxyl group in the molecular. It preferably contains an unsaturated monocarboxylic acid type monomer, and an α,β-unsaturated dicarboxylic acid type monomer and/or an anhydride thereof as essential components. These components may be each used either singly or in the form of a combination of two or more species. When the α,β-unsaturated dicarboxylic acid type monomer and/or the anhydride thereof is contained as an essential component, the abrupt increase of viscosity owing to the run-away of the polymerization can be precluded. The content of the unsaturated carboxylic acid type monomer in the ethylenically unsaturated monomer component is not particularly restricted so long as it canmanifest the function and effect of the present invention. This unsaturated carboxylic acid type monomer is preferably contained as a main component, for example. Other components may be or may not be contained.

As concrete examples of the unsaturated monocarboxylic acid type monomer, (meth)acrylic acid, crotonic acid, tiglic acid, 3-methylcrotonic acid, and 2-methyl-2-pentenoic acid may be cited. Among those compound, (meth)acrylic acid is preferable in respect to availability.

As concrete examples of the α,β-unsaturated dicarboxylic acid type monomer and/or the anhydride thereof, α,β-unsaturated dicarboxylic acids such as maleic acid, fumaric acid, mesaconic acid, and citraconic acid; and α,β-unsaturated dicarboxylic anhydrides such as maleic anhydride and citraconic anhydride may be cited. Among them, at least one compound selected from the group consisting of maleic acid, fumaric acid, and maleic anhydride is preferably used herein in respect to availability.

The content of the α,β-unsaturated dicarboxylic acid type monomer and/or the anhydride thereof in the unsaturated carboxylic acid type monomer is preferably in the range of 0.1 - 99.9 weight %, more preferably 1 - 99 weight %, still more preferably 10 - 90 weight %, and particularly preferably 20 - 80 weight % to make the monomer to be graft polymerized at a proper speed and preventing the viscosity from being increased.

One preferred embodyment of the ethylenically unsaturated monomer component in the present invention contains an α,β-unsaturated dicarboxylic acid type monomer and (meth)acrylic acid as essential components. The weight ratio of the α,β-unsaturated dicarboxylic acid type monomer to the (meth)acrylic acid in this form is preferably in the range of 1/99 - 99/1, more preferably 5/95 - 95/5, still more preferably 10/90 - 90/10, and particularly preferably 15/85 - 85/15.

The ethylenically unsaturated monomers, which can be contained in the ethylenically unsaturated monomer component other than unsaturated carboxylic acid type monomers, include ethylenically unsaturated carboxylic esters and other ethylenically unsaturated monomers, for example. These monomers can be used either singly or in the form of a combination of two or more members. As concrete examples of the ethylenically unsaturated carboxylic esters, alkyl esters of maleic acid such as monomethyl maleate, dimethyl maleate, monoethyl maleate, and diethyl maleate; alkyl esters of fumaric acid such as monomethyl fumarate, dimethyl fumarate, monoethyl fumarate, and diethyl fumarate; alkyl (meth)acrylates such as methyl (meth)acrylate, ethyl (meth)acrylate, butyl (meth)acrylate, and stearyl (meth)acrylate; hydroxyl group-containing unsaturated carboxylic esters such as hydroxyalkyl (meth)acrylates including hydroxyethyl (meth)acrylate and hydroxypropyl (meth)acrylate; andpolyalkyleneglycol (meth)acrylates such as (methoxy) polyethylene glycol (meth)acrylate, phenoxy polyethylene glycol (meth)acrylate, naphthoxy polyethylene glycol (meth)acrylate, monophenoxy polyethylene glycol maleate, and carbazol polyethylene glycol (meth)acrylate may be cited.

As concrete examples of the ethylenically unsaturated monomer other than the ethylenically unsaturated carboxylic esters, aromatic vinyl type monomers such as styrene; amide group-containing vinyl type monomers such as (meth)acryl amide and (meth)acrylalkyl amides; vinyl esters such as vinyl acetate, vinyl propionate, vinyl pivalate, vinyl benzoate, and vinyl cinnamate; alkenes such as ethylene and propylene; dienes such as butadiene and isoprene; trialkyloxy silyl group-containing vinyl type monomers such as vinyl trimethoxy silane and vinyl triethoxy silane; silicon atom-containing vinyl type monomers such as γ-(methacryloyloxypropyl) trimethoxy silane; and maleimide derivatives such as maleimide, methyl maleimide, ethyl maleimide, propyl maleimide, butyl maleimide, octyl maleimide, dodecyl maleimide, stearyl maleimide, phenyl maleimide, and cyclohexyl maleimide may be cited.

As other examples, nitrile group-containing vinyl type monomers such as (meth)acrylonitrile; aldehyde group-containing vinyl type monomers such as (meth)acrolein; amino group-containing vinyl type monomers such as dialkylaminoethyl (meth)acrylates including dimethyl aminoethyl (meth)acrylate; unsaturated ethers such as (methoxy) polyethylene glycol (meth)allyl ether and (methoxy)polyethylene glycol isopropenyl ether; sulfonic acid group-containing vinyl type monomers such as 2-acrylamide-2-methyl propane sulfonic acid, (meth)allyl sulfonic acid, 2-sulfoethyl (meth)acrylate, vinyl sulfonic acid, hydroxyallyloxy propane sulfonic acid, and styrene sulfonic acid; and other functional group-containing vinyl type monomers such as vinyl chloride, vinylidene chloride, allyl chloride, allyl alcohol, vinyl pyrrolidone, and ethylvinyl ether may be cited.

[Polyether compound] The polyether compound is preferred to contain at least one member selected from the group consisting of alkylene oxide adducts of compounds having 1 - 30 carbon atoms and one active hydrogen atom and alkylene oxide adducts of amine. More preferably, at least one member selected from the group consisting of alkylene oxide adducts of compounds having 2 - 30 carbon atoms and one active hydrogen atom, alkylene oxide adducts of compounds having 4 - 30 carbon atoms and two active hydrogen atoms, alkylene oxide adducts of compounds having 1 - 30 carbon atoms and three or more active hydrogen atoms, and alkylene oxide adducts of amine is used. Though other components may be contained, such an alkylene oxide adducts is preferred to be contained as a main component. These alkylene oxide adducts may be used either singly or in the form of a combination of two or more members.

The alkylene oxide adduct can be prepared by polymerizing an alkylene oxide with a compound possessing an active hydrogen atom by the known method. Structure having one or more oxyalkylene chain linked to the residue of a compound having 1 - 30 carbon atoms and having one or more active hydrogen atom and structures having one oxyalkylene chain linked to a the residue of an amine can be used. Preferably, structures having one oxyalkylene chain linked to the residue of a compound having 2 - 30 carbon atoms and having one active hydrogen atom, structures having one or more oxyalkylene chain linked to the residue of a compound having 4 - 30 carbon atoms and having two active hydrogen atoms, structures having one or more oxyalkylene chain linked to the residue of a compound having 1 - 30 carbon atoms and having three or more active hydrogen atoms, and structure having one oxyalkylene chain linked to the residues of amines. The terminals of oxyalkylene chains not linked to the residue of a compound having an active hydrogen atom or to the residue of an amine are linked to a hydrogen atom, a monohydric metallic atom, a dihydric metallic atom, an ammonium group, an organic amine group, a hydrocarbon atom having 1-30 carbon atoms, an oxohydrocarbon group, an amide hydrocarbon group, a carboxyl hydrocarbon group, or a sulfonyl (hydrocarbon) group having 0 - 30 carbon atoms. When two or more oxyalkylene chains are contained in one molecule, the relevant terminal structures may be the same or different. Among these structures of terminals, structures linked to a hydrogen atom or a hydrocarbon group having 1 - 30 carbon atoms is preferable in respect to applicability.

As concrete examples of the alkylene oxide, ethylene oxide, propylene oxide, butylene oxide, and styrene oxide may be cited. Among them, it is preferable to use ethylene oxide and/or propylene oxide as essential components and other alkylene oxides as optional component in respect to applicability. These alkylene oxides may be used either singly or in the form of a combination of two or more members. When two or more alkylene oxides are used, the style of addition may be block addition, alternate addition, and random addition, for example.

The compound having an active hydrogen is preferred to contain at least one member selected from the group consisting of monohydric or higher alcohols having 1 - 30 carbon atoms and amines. The active hydrogen-containing compound may optionally contain a carboxylic acid or the like.

As concrete examples of the monohydric or higher alcohol having 1 - 30 carbon atoms, primary alcohols having 1 - 22 carbon atoms such as methanol, ethanol, n-propanol, n-butanol, n-pentanol, n-hexanol, n-heptanol, 2-ethylbutanol, n-octanol, 1-dodecanol, 1-octadecanol, 2-ethylhexanol, cyclohexanol, allyl alcohol, and 3-methyl-3-buten-1-ol; secondary alcohols having 3 - 18 carbon atoms such as iso-propyl alcohol, 2-butanol, 2-pentanol, 3-pentanol, 2-heptanol, 3-heptanol, methyl amyl alcohol, 2-octanol, nonyl alcohol, and alcohols having 12 - 14 carbon atoms obtained by oxidizing n-paraffins; monohydric alcohols such as tertiary alcohols including tert-butanol and tert-pentanol, dihydric alcohols such as ethylene glycol, propylene glycol, 1,4-butane diol, 1,6-hexane diol, 1,2-hexane diol, hexylene glycol, and 2,2-diethyl-1,3-propane diol, and tetrahydric and higher alcohols such as glycerin, trimethylol propane, 1,3,5-pentane triol, pentaerythritol, glucose, fructose, sorbitol, gluconic acid, tartaric acid, and polyvinyl alcohol may be cited. Among them, monohydric alcohols having 2 - 30 carbon atoms, dihydric alcohols having 4 - 30 carbon atoms, and trihydric alcohols having 1 - 30 carbon atoms prove particularly advantageous. The monohydric alcohols preferably have 3 - 20 carbon atoms, and more preferably 3 - 15 carbon atoms, though not particularly restricted. As concrete examples of the preferred monohydric alcohol, n-butanol, 2-butanol, tert-butanol, n-octanol, 2-ethyl hexanol, 1-dodecanol, and secondary alcohols having 12 - 14 carbon atoms obtained by oxidizing n-paraffins. As concrete examples of the preferred dihydric alcohol, 1,4-butane diol, 1,6-hexane diol, 1,2-hexane diol, and 2,2-diethyl-1,3-propane diol may be cited. As concrete examples of the preferred trihydric alcohol, glycerin, trimethylol propane, glucose, and sorbitol may be cited. When the graft polymer of an alkylene oxide adduct of such an alcohol with maleic acid and/or acrylic acid is used, the air content in the hydraulic material can be easily adjusted and the fine and quality air can be entrained into the composition for hydraulic material.

The amine is not particularly restricted. As concrete examples of the amine, ammonia, methyl amine, ethyl amine, ethylene diamine, diethylene triamine, triethylene tetramine, propyl amine, butyl amine, 2-ethylbutyl amine, octyl amine, dimethyl amine, dipropyl amine, dimethyl ethanol amine, dibutyl amine, trimethyl amine, triethyl amine, allyl amine, cyclobutyl amine, cyclohexyl amine, lauryl amine, aniline, diphenyl amine, urea, thiourea, and polyethylene imine may be cited.

As concrete examples of the carboxylic acid, monocarboxylic acids such as valeric acid, caproic acid, enanthic acid, caprylic acid, lauric acid, stearic acid, oleic acid, elaidic acid, and erucin acid; dicarboxylic acids such as maronic acid, succinic acid, glutaric acid, and adipic acid; and oxycarboxylic acids such as lactic acid, tartaric acid, citric acid, and malic acid may be cited.

The method of polymerization in the preparation of the alkylene oxide adduct is not particularly restricted. The known method of polymerization is used preferably in consideration of applicability. Specifically, the method using an acid catalyst or an alkali catalyst proves advantageous. As examples of the acid catalyst, halogen compounds of metals and metalloids such as boron trifluoride which are Lewis acid catalysts; and mineral acids such as hydrogen chloride, hydrogen bromide, sulfuric acid may be cited. As examples of the alkali catalyst, potassium hydroxide, sodium hydroxide, and sodium hydride may be cited.

The polyether compound may be a derivative from the alkylene oxide adduct mentioned above. This derivative is not particularly restricted. As examples of the derivative, the terminal group conversion products obtained by converting the terminal functional groups of the polyether compounds and the cross-linking products obtained by the reaction of polyether compounds with a cross-linking agent having a plurality of carboxyl groups, isocyanate groups, amino groups, or halogen groups in one molecule may be cited.

As examples of the terminal group conversion product, the products obtained by having the hydroxyl groups at all or part of the terminals of polyether compounds (1) esterified with a dicarboxylic acid (anhydride) such as a fatty acid, succinic acid, succinic anhydride, maleic acid, maleic anhydride, or adipic acid having 2 - 22 carbon atoms, (2) alkoxylated by the removal of hydrogen halogenide using an alkyl halogenide to afford alkoxy polyalkylene glycols, and (3) sulfated with a known sulfating agent such as chlorosulfonic acid, sulfuric anhydride, or sulfamic acid to afford polyoxyalkylene sulfuric acid (sulfate) may be cited.

Though the weight average molecular weight of the polyether compound is not particularly restricted, it is preferably in the range of 100 - 1,000,000, more preferably 200 - 100,000, and still more preferably 300 - 50,000. The degree of dispersion (Mw/Mn) of the polyether compound is not particularly restricted. It is preferably in the range of 1 - 100, more preferably 1.1 - 10, and still more preferably 1.1 - 3.

The polyether compound is used as the raw material for the polymer contemplated by the present invention. Thus, the balance between hydrophilicity and hydrophobicity of this polyether compound greatly affects the balance between hydrophilicity and hydrophobicity of the polymer to be produced. If the hydrophobicity of the polymer is unduly large, the excess will result in excessively decreasing the air content in concrete and rendering the adjustment of the air content difficult. If the hydrophilicity of the polymer is unduly large, the excess will result in excessively increasing the amount of air to be entrained into the hydraulic material and rendering difficult the adjustment of the air content at a proper level. For the present invention, therefore, it is important for the polyether compound to secure moderate balance between hydrophilicity and hydrophobicity. HLB constitutes one index of such balance between hydrophilicity and hydrophobicity. A number of attempts have been made to describe this HLB numerically. The present invention adopts the HLB value calculated in accordance with the Davis' formula inserted in the book titled "Techniques of Emulsification and Solubilization," (8th edition, published on October 30, 1992 by Kogaku Toshosha) written by Susumu Tsuji. The HLB of the polyether compound is preferably in the range of 1 - 15, more preferably 2 - 12, and still more preferably 2 - 10. As commercial products of the polyether compound, the alkylene oxide adduct of a primary alcohol (made by Sanyo Kasei K.K. and sold under the trademark designation of "New Pole LB, 50 HB Series" and the alkylene oxide adduct of a secondary alcohol having 12 - 14 carbon atoms (made by Nippon Shokubai Co., Ltd. and sold under the trademark designation of "Softanol") may be cited, for example.

[Method for production of polymer component] The graft polymerization for preparing the polymer component in the present invention is implemented by using the graft site generated during the extraction of a hydrogen atom or a halogen atom from the polyether compound as the point for initiating the addition polymerization of an ethylenically unsaturated monomer.

The method for the graft polymerization is not particularly restricted but is only required to be capable of graft polymerizing an ethylenically unsaturated monomer to the polyether compound. The polymerization is effected, for example, in the presence of a polymerization initiator in respect that the performance of a hydrophilic graft polymer can be exalted by increasing the grafting ratio. The polymerization initiator is not particularly restricted but may be arbitrarily selected from known radical initiators. Organic peroxides prove particularly advantageous from the viewpoint of reactivity, for example.

The organic peroxide is not particularly restricted. The organic peroxides enumerated in (1) - (8) below may be cited as concrete examples of this organic peroxide. These organic peroxides may be used either singly or in the form of a combination of two or more members. (1) Ketone peroxides: methylethyl ketone peroxide, cyclohexanone peroxide, 3,3,5-trimethyl cyclomethylethyl ketone peroxide, 3,3,5-trimethyl cyclohexanone peroxide, methyl cyclohexanone peroxide, methyl acetoacetate peroxide, and acetyl acetone peroxide. (2) Hydroperoxides: tert-butyl hydroperoxide, cumene hydroperoxide, diisopropyl benzene hydroperoxide, 2,5-dimethylhexane-2,5-dihydroperoxide, 1,1,3,3-tetramethylbutyl hydroperoxide, and 2-(4-methyl cyclohexyl)-propane hydroperoxide. (3) Dialkyl peroxides: di-tert-butyl peroxide, tert-butyl cumyl peroxide, dicumyl peroxide, α,α'-bis(tert-butyl peroxy)-p-diisopropyl benzene, α,α'-bis(tert-butyl peroxy)-p-isopropyl hexine, 2,5-dimethyl-1,5-di(tert-butyl peroxy)-hexane, and 2,5-dimethyl-2,5-di(tert-butyl peroxy)-hexine-3. (4) Peroxy esters: tert-butyl peroxy acetate, tert-butyl peroxy laurate, tert-butyl peroxy benzoate, di-tert-butyl peroxy isophthalte, 2,5-dimethyl-2,5-di(benzoyl peroxy) hexane, tert-butyl peroxy isopropyl carbonate, tert-butyl peroxy isobutylate, tert-butyl peroxy pivalate, tert-butyl peroxy neodecanoate, cumyl peroxy neodecanoate, tert-butyl peroxy-2-ethyl exanoate, tert-butyl peroxy-3,5,5-trimethyl hexanoate, tert-butyl peroxy maleic acid, cumyl peroxy octoate, tert-hexyl peroxy pivalate, tert-hexyl peroxy neohexanoate, and cumyl peroxy neohexanoate. (5) Peroxy ketals: n-butyl-4,4-bis(tert-butyl peroxy) valeate, 2,2-bis(tert-butyl peroxy) butane, 1,1-bis(tert-butyl peroxy)-3,3,5-trimethyl cyclohexane, 1,1-bis(tert-butyl peroxy) cyclohexane, and 2,2-bis(tert-butyl peroxy) octane. (6) Diacyl peroxides: acetyl peroxide, isobutyryl peroxide, octanoyl peroxide, decanoyl peroxide, lauroyl peroxide, 3,3,5-trimethyl cyclohexanoyl peroxide, succinic acid peroxide, benzoyl peroxide, 2,4-dichlorobenzoyl peroxide, and m-toluyl peroxide. (7) Peroxy dicarbonates: diisopropyl peroxy dicarbonate, di-2-ethylhexyl peroxy dicarbonate, di-n-propyl peroxy dicarbonate, bis-(4-tert-butyl cyclohexyl) peroxy dicarbonate, dimyristyl peroxy dicarbonate, di-methoxy isopropyl peroxy dicarbonate, di(3-methyl-3-methoxybutyl) peroxy dicarbonate, and di-allyl peroxy dicarbonate. (8) Other organic peroxides: acetylcyclohexyl sulfonyl peroxide and tert-butyl peroxy allyl carbonate.

In the graft polymerization, the decomposing catalyst for an organic peroxide and a reducing compound may be used in combination with the organic peroxide. When the graft polymerization is carried out by adding an ethylenically unsaturated monomer to the polyether compound, the polymerization initiator may be added in advance to the polyether compound, it may be added to the ethylenically unsaturated monomer component, or it may be added to the reaction system simultaneously with the ethylenically unsaturated monomer component. Though the amount of the polymerization initiator to be used is not particularly restricted, it is properly in the range of 0.1 - 30 weight % and more preferably 0.5 - 20 weight %. If this amount falls short of 0.1 weight % or exceeds 30 weight %, the deviation will possibly result in lowering the grafting ratio to the polyether compound.

The graft polymerization can be carried out by known polymerization method such as solution polymerization or bulk polymerization. The solvent to be used in carrying out the solution polymerization is not particularly restricted. It is preferred to be incapable of exerting an adverse effect on the efficiency of polymerization. As concrete examples of the solvent, water; hydrocarbon type solvents such as n-butane, propane, benzene, cyclohexane, and naphthalene; halogenated hydrocarbon type solvents such as methyl chloride, chloroform, carbon tetrachloride, and trichloroethane; alcohol type solvents such as propanol, butanol, isopropyl alcohol, isobutyl alcohol, and isoamyl alcohol; ether type solvents such as ethyl ether, isopropyl ether, and butyl ether; ketone type solvents such as methylethyl ketone, ethylbutyl ketone, and methylisobutyl ketone; ester type solvents such as methyl acetate, ethyl acetate, ethyl benzoate, and ethyl lactate; acid type solvents such as formic acid, acetic acid, and propionic acid; and polyhydric alcohols such as (poly)ethylene glycol, ethylene glycol monobutyl ether, ethylene glycol monobutyl ether acetate, tetraethlene glycol, and propylene glycol monobutyl ether and derivatives thereof may be cited. These solvents may be used either singly or in the form of a combination of two or more members.

The graft polymerization may be performed either batchwise or continuously. The temperature of the graft polymerization is preferably in the range of 80 - 160°C and more preferably 100 - 160°C. If this temperature is lower than 80°C, the shortage will possibly prevent the graft polymerization from proceeding smoothly and degrading the efficiency of grafting of the polyether compound to the ethylenically unsaturated monomer. If the temperature exceeds 160°C, the excess will possibly result in causing the polyether compound as the raw material and the produced graft polymer to undergo thermal decomposition.

In the graft polymerization, the polyether compound is preferably placed either partially or wholly in the polymerization vessel during the initial stage of the polymerization. When the ethylenically unsaturated monomer component contains an α,β-unsaturated dicarboxylic acid type monomer, namely at least one monomer selected from the group consisting of maleic acid, fumaric acid, and maleic anhydride, in conjunction with (meth)acrylic acid, it is preferable to have more than one half of the α,β-unsaturated dicarboxylic acid type monomer mixed in advance with the polyether compound. Then, after this mixture has been heated to a temperature exceeding the pour point of the polyether compound, the resultant mixture and the remainder of the ethylenically unsaturated monomer and the polymerization initiator separately added thereto are together made to undergo graft polymerization. By this method, the introduction rate of the α,β-unsaturated dicarboxylic acid type monomer into the graft polymer can be greatly exalted.

The amount of the ethylenically unsaturated monomer component to be used is not particularly restricted. The amount of the unsaturated carboxylic acid type monomer contained in the ethylenically unsaturated monomer component is preferably in the range of 0.1 - 100 parts by weight, more preferably 1 - 80 parts by weight, and still more preferably 2 - 65 parts by weight, based on 100 parts by weight of the polyether compound. If this amount falls short of 0.1 part by weight, the shortage will possibly prevent the polymer from acting easily on cement and induce impairment of the performance of the polymer. If the amount exceeds 100 parts by weight, the excess will possibly result in aggravating the delay in the curing with the polymer and increasing the viscosity of the reaction mixture to the extent of rendering difficult the handling thereof.

The polymer which is obtained by the graft polymerization may be used in its unmodified form as the admixture for the hydraulic material or may be used as dissolved in a solvent. As concrete examples of the solvent, water, alcohols, and their likes may be cited. Preferably, water is used. When the polymer contains a carboxyl group or an acid group such as sulfonic acid group or an ester group thereof, the salt obtained by partly or wholly converting the acid group or the ester group by the addition of a base may be used as an additive.

The base is not particularly restricted. As examples of the base, hydroxides of alkali metals and alkaline earth metals such as sodium hydroxide, potassium hydroxide, calcium hydroxide, and lithium hydroxide; carbonates of alkali metals and alkaline earth metals such as sodium carbonate, calcium carbonate, and lithium carbonate; and amines such as ammonia, monoethanol amine, diethanol amine, and triethanol amine may be cited. These bases may be used either singly or in the form of a combination of two or more members.

The method for implementing the graft polymerization is not restricted to the method described above. It may be arbitrarily selected from among the methods disclosed in EP-639592, EP-754712, JP-A-11-279220, etc.

In the compound represented by the general formula (B-1), which is the component (B) used in the present invention, WO denotes an oxyalkylene group formed of oxyethylene (EO) and oxypropylene (PO) at an EO/PO molar ratio preferably in the range of 95/5 - 5/95 and more preferably 90/10 - 5/95. If the proportion of EO exceeds the upper limit of the range, the excess will be at a disadvantage in decreasing the defoaming effect. The symbol p in the formula (B-1) denotes the number of mols of the oxyalkylene group added and this number is in the range of 15 - 200, preferably 15- 170, more preferably 20 - 160, and particularly preferably 25 - 150. If p falls short of 15, the shortage will be at a disadvantage in decreasing the defoaming effect. If p exceeds 200, the excess will be at a disadvantage in preventing minute air from being entrained into the composition for hydraulic material. The form of union of EO and PO is not particularly restricted. The EO and PO can exist in the form of block copolymer, alternate copolymer, or random copolymer. The preferable form is a block copolymer of EO/PO/EO or PO/EO/PO and more preferably a block copolymer of EO/PO/EO.

In the compound represented by the general formula (B-2), ZO denotes an oxyalkylene group formed of oxyethylene (EO) and oxypropylene (PO) at an EO/PO molar ratio in the range of 95/5 - 0/100. If the proportion of EO exceeds the upper limit of the range, the excess will be at a disadvantage in decreasing the defoaming effect. The symbol s in the general formula (B-2) denotes the number of mols of the oxyalkylene group and this number is in the range of 5 - 200. If s falls short of 5, the shortage will result in unduly decreasing the defoaming effect. If s exceeds 200, the excess will result in unduly increasing the amount of entrained air. R⁷ and R⁸ identically denote a hydrogen atom or an alkyl group having 1 - 3 carbon atoms. As examples of the alkyl group having 1 - 3 carbon atoms, methyl group, ethyl group, and propyl group may be cited.

The component (C) is at least one polymer selected from the group consisting of (c-1) a polymer with a structure having one oxyalkylene chain possessing a side chain containing a carboxylic group linked to the residue of a compound having 2 - 30 carbon atoms and possessing one active hydrogen atom, (c-2) a polymer with a structure having at least one oxyalkylene chain possessing a side chain containing a carboxyl group linked to the residue of a compound having 4 - 30 carbon atoms and possessing two active hydrogen atoms, (c-3) a polymer with a structure having at least one oxyalkylene chain possessing a side chain containing a carboxyl group linked to the residue of a compound having 1 - 30 carbon atoms and possessing 3 or more active hydrogen atoms, and (c-4) a polymer with a structure having at least one oxyalkylene chain possessing a side chain containing a carboxylic group linked to the residue of an amine. The polymers represented by (c-1) - (c-4) are such as have already been explained with respect to the component (A) and, therefore, their explanation will be omitted here. For example, the alkylene chain possessing a side chain containing a carboxyl group is preferably represented by the formula (1).

The component (D) is a compound represented by (B-3). In the general formula (B-3), R¹ - R⁶ identically denote a hydrogen atom or an alkyl group having 1 - 10 carbon atoms. X and Y identically denote an alkylene group having 2 - 5 carbon atoms. The symbols q and r independently denote a numeral of 0 - 20. As examples of the alkyl group having 1 - 10 carbon atoms, methyl group, ethyl group, n-propyl group, iso-propyl group, n-butyl group, iso-butyl group, tert-butyl group, pentyl group, hexyl group, heptyl group, octyl group, nonyl group, and decyl group may be cited. R¹ - R⁴ preferably denote a hydrogen atom, methyl group, and butyl group and R⁵ and R⁶ preferably denote a hydrogen atom. As concrete examples of the alkylene group having 2 - 5 carbon atoms denoted by X and Y, an ethylene group, propylene group, butylene group, and pentamethylene group may be cited. In OX and YO, two or more species of oxyalkylene group may be used in combination. When two or more such species are used in combination, any of the forms of addition such as block addition, alternate addition, and random addition may be adopted. The numbers of addition moles, q and r, respectively in OX and YO are preferred to be in the range of 0 - 20. If n exceeds 20, the excess will be at a disadvantage in rather increasing the amount of air to be entrained. The mixing ratio of the polymer and the compounds (B-1)

- (B-3) (hereinafter referred to collectively as "compound component") which jointly form the admixture composition contemplated by the present invention is not particularly restricted. The proportion of the compound is preferably in the range of 0.01 - 30 weight %, more preferably 0.05 - 25 weight %, and still more preferably 0.1 - 25 weight %, based on the weight of the solids content of the polymer. The range proves advantageous from the viewpoints of the defoaming effect and the adjustment of the amount of air with the air-entraining agent.

The admixture composition contemplated by the present invention may contain the air-entraining agent. The air-entraining agent to be used in the present invention is not particularly restricted but is only required to be capable of entraining air into the composition for hydraulic material. As typical examples of the air-entraining agent, resin soap, saturated or unsaturated fatty acids and salts thereof, sodium hydroxystearate, lauryl sulfate, alkylbenzene sulfonic acids (ABS), linear alkylbenzene sulfonic acids (LAS), alkane sulfonates, polyoxyethylene alkyl(phenyl) ethers, polyoxyethylene alkyl(phenyl) ether sulfuric esters, and salts thereof, and macromolecular resin type surfactants such as carboxylic acid salts, protein materials, and gelatin may be cited. Preferably, the air-entraining agent possesses the performance specified in Japanese Industrial Standard (JIS) A6204 (2000).

The proportion of the air-entraining agent in the composition is not particularly restricted. From the viewpoint of the adjustment of the amount of air, however, it is preferably in the range of 0.000001 - 2 weight %, more preferably 0.00001 - 2 weight %, and still more preferably 0.00001 - 1.5 weight % as reduced to solids content, based on the weight of the hydraulic material.

The admixture composition for hydraulic material of the present invention may further contain the components that will be specifically described below. By the addition of such a component, it is made possible to manifest the effect of the present invention on the hydraulic material and actuate various other effects. The concentrations of the polymer and compound in the admixture composition for hydraulic material is not particularly restricted.

The admixture composition for hydraulic material may or may not contain components other than the polymer component, the compound component, and the air-entraining agent. Preferably, it contains the polymer component, the compound component, and the air-entraining agent as main components.

The admixture composition for hydraulic material may further contain a cement dispersing agent. This cement dispersing agent is not particularly restricted but is only required to be capable of dispersing cement particles. As examples of the cement dispersing agent, lignin sulfonic acid and water-reducing admixtures of the polycarboxylic acid type, naphthalene type, melamine type, and aminosulfonic acid type may be cited besides the known cement dispersing agents and water-reducing admixtures. These cement dispersing agents may be used either singly or in the form of a combination of two or more members. By the inclusion of such a cement dispersing agent, it is possible to improve the cement additive in the action to disperse the particles in the hydraulic material. As a result, the hydraulic material will be made to excel in fluidity, exalt workability markedly, and derive improvement in strength and durability of the hardened mass owing to the reduction of the amount of water contained in the hydraulic material.

The lignin sulfonic acid and the like which are cited as water-reducing admixtures are generally called air-entraining and water-reducing admixtures. The water-reducing admixtures of the polycarboxylic acid type, naphthalene type, melamine type, and aminosulfonic acid type are generally called air-entraining and high-range water-reducing admixtures. Among other water-reducing admixtures, air-entraining and high-range water-reducing admixtures are used preferably and polycarboxylic acid type air-entraining and high-range water-reducing admixtures are used more preferably.

The compounding ratio of the admixture composition for hydraulic material and the cement dispersing agent is not particularly restricted. When the air-entraining and high-range water-reducing admixture is used as the cement dispersing agent, for example, the solids weight ratio of the admixture composition/air-entraining and high-range water-reducing admixture is preferably in the range of 1/100 - 100/1, more preferably 1/100 - 50/1, and still more preferably 1/100 - 25/1. If the amount of the admixture for hydraulic material to be added exceeds the upper limit of the range of weight ratio, the excess will possibly result in impairing the water reducing property of the air-entraining and high-range water-reducing admixture.

The form in which the admixture composition of the present invention is added to the hydraulic material is not particularly restricted. The component (A) and the component (B) or the component (C) and the component (D), for example, may be added together before they are added as blended to the hydraulic material. Alternatively, the component (A) and the component (B) or the component (C) and the component (D) may be separately prepared and individually added to the hydraulic material. This mode of addition similarly applies to other combinations of the components under discussion mentioned in the present specification.

The admixture composition for hydraulic material, when necessary, may further contain the solvents and the other components so long as their addition avoids preventing the present invention from manifesting the action and effect inherent therein. For example, known additives (materials) in following (1) - (9) may be used.

(1) Water soluble macromolecular substances: unsaturated carboxylic acid polymers such as (sodium) polyacrylate, (sodium) polymethacrylate, (sodium) polymaleate, and sodium salts of acrylic acid-maleic acid copolymers; nonionic cellulose ethers such as methyl cellulose, ethyl cellulose, hydroxymethyl cellulose, hydroxyethyl cellulose, carboxymethyl cellulose, carboxyethyl cellulose, and hydroxypropyl cellulose; polysaccharides produced by microorganic fermentation of yeast glucan, xanthane gum, β-1,3-glucanes (of both linear and branched forms such as, for example, curdlan, parmylum, pachyman, scleroglucan, and laminaran); polyacrylamide; polyvinyl alcohol; starch; starach phosphoric esters; sodium alginate; gelatin; and copolymers of acrylic acid containing an amino group in the molecular unit thereof and quaternized compounds thereof. (2) Macromolecular emulsions: copolymers of various vinyl monomers such as alkyl (meth)acrylates, etc.; (3) Retarding agents: oxycarboxylic acids and salts thereof such as gluconic acid, glucoheptonic acid, arabonic acid, malic acid, and citric acid and inorganic and organic salts thereof with sodium, potassium, calcium, magnesium, ammonium, and triethanol amine; saccharides such as monosaccharides including glucose, fructose, galactose, saccharose, xylose, apiose, libose, and isomerized sugar, oligosaccharides such as disaccharides, trisaccharides, polysaccharides such as dextran, and molasses including them; sugar alcohols such as sorbitol; magnesium silicofluoride; phosphoric acid and salts thereof or boric esters; aminocarboxylic acids and salts thereof; alkali-soluble proteins; humic acid; tannic acid; phenols; polyhydric alcohols such as glycerin; and phosphonic acid and derivatives thereof such as amino tri-(methylene phosphonic acid), 1-hydroxyethylidene-1,1-diphosphonic acid, ethylene diamine tetra(methylenephosphonic acid), and diethylene triamine penta(methylenephosphonic acid), and alkali metal salts and alkaline earth metal salts thereof. (4) high-early-strength admixture accelerating admixture: soluble calcium salts such as calcium chloride, calcium nitrite, calcium nitrate, calcium bromide, and calcium iodide; chlorides such as iron chloride and magnesium chloride; sulfates; potassium hydroxide; sodium hydroxide; carbonates; thiosulfates; formic acid and formates such as calcium formate; alkanol amine; alumina cement; and calcium aluminate silicate. (5) Other surfactants: aliphatic monohydric alcohols such as octadecyl alcohol and stearyl alcohol which has 6 - 30 carbon atoms in the molecular, alicyclic monohydric alcohols such as abiethyl alcohol which have 6 - 30 carbon atoms in the molecular, monohydric mercaptans such as dodecyl mercaptan which have 6 - 30 carbon atoms in the molecular, alkyl phenols such as nonyl phenol which have 6 - 30 carbon atoms in the molecular, amines such as dodecyl amine which have 6 - 30 carbon atoms in the molecular unit, and polyoxy alkylene derivatives having 10 or more mols of oxyalkylene such as ethylene oxide and propylene oxide added to carboxylic acids such as lauric acid and stearic acid which have 6 - 30 carbon atoms in the molecular unit; alkyl diphenyl ether sulfonates having ether linked thereto two phenyl groups containing a sulfonic group and optionally containing an alkyl group or an alkoxyl group as a substituent; various anionic surfactants; various cationic surfactants such as alkyl amine acetate and alkyl trimethyl ammonium chloride; various nonionic surfactants; and various amphoteric surfactants. (6) Waterproof agents: fatty acids (salts), fatty acid esters, oils and fats, silicon, paraffin, asphalt, wax, etc. (7) Corrosion inhibitors: nitrites, phosphates, and zinc oxide. (8) Crack inhibitors: polyoxyalkyl ethers and alkane diols such as 2-methyl-2,4-pentadiol etc. (9) Expansive additives: ettringite and coal.

As concrete examples of the other known cement additive, cement wetting agent, thickener, separation reducing agent, coagulating agent, strength enhancer, self-leveling agent, coloring agent, mildewproofing agent, blast furnace slag, fly ash, cinder ash, clinker ash, husk ash, silica fume, silica powder, and gypsum may be cited. These known cement additives may be used either singly or in the form of a combination of two or more members.

The admixture composition for hydraulic material can be widely applied to the known methods of construction using concrete. The method of construction is not particularly restricted. As concrete examples of the method of construction, high-strength concrete construction, super-high strength concrete construction, high-flowing concrete construction, and flowing concrete construction may be cited. The form of use of the composition is not particularly restricted. The composition, for example, may be used directly in a solid form or in the form of powder. Alternatively, it may be blended with water and used in the form of an aqueous solution or a water dispersion, forexample.

The hydraulic material to which the admixture composition for hydraulic material is applied is not particularly restricted but is only required to have hydraulicity or potential hydraulicity. As concrete examples of the hydraulic material, portland cements such as ordinary portland cement and high-early-strength portland cement; various blended cements such as silica cement, fly-ash cement, blast furnace cement, high alumina cement, and high belite content cement; cement components such as tricalcium silicate, dicalcium silicate, tricalcium aluminate, and tetracalcium iron aluminate; and fly ash possessing potential hydraulicity may be cited. These hydraulic materials may be used either singly or in the form of a combination of two or more members. Among hydraulic materials, the ordinary portland cement is generally used particularly advantageously.

The amount of the admixture composition for hydraulic material to be used is preferably in the range of 0.0001 - 15 weight %, more preferably 0.001 - 10 weight %, still more preferably 0.005 - 7 weight %, and most preferably 0.01 - 5 weight %, as reduced to solids content based on the weight of the hydraulic material. If this amount falls short of 0.0001 weight %, the shortage will possibly result in degrading the effect of the present invention. If the amount exceeds 15 weight %, the excess will tend to retard the setting of the hydraulic material.

The admixture composition for hydraulic material is preferably formulated in the cement composition among conceivable compositions for hydraulic material. The cement composition is not particularly restricted but may be arbitrarily selected from among known cement compositions. As examples of the known cement composition, cement water paste (cement water slurry) containing cement and water; mortar containing cement, water and sand; and concrete containing cement, water, sand, and gravels may be cited.

The cement to be incorporated in the cement composition is not particularly restricted but may be arbitrarily selected from known cements. As concrete examples of the known cement, portland cements such as ordinary portland cement and high-early-strength portland cement; and various blended cement such as silica cement, fly-ash cement, blast furnace cement, alumina cement, and belite high content cement may be cited. These known cements may be used either singly or in the form of a combination of two or more members. The portland cement is popularly used among other known cements and adapted to allow favorable application of the cement additive mentioned above.

The proportion of the cement additive to the cement composition is not particularly restricted. The weight ratio of the admixture composition for hydraulic material, which is an essential component of the cement additive, to the cement is preferably in the range of 0.0001 - 15 weight %, more preferably 0.001 - 10 weight %, still more preferably 0.005 - 7weight %, and most preferably 0.01 - 5 weight %, as reduced to solids content, based on the weight of the cement. If this amount falls short of 0.0001 weight %, the shortage will possibly result in preventing the effect of the present invention from being fully manifested. If the amount exceeds 15 weight %, the excess will possibly tend to retard the setting of the cement composition.

The proportion of the water formulated in the cement composition is not particularly restricted. This proportion is preferably in the range of 10 - 80 weight %, more preferably 15 - 75 weight %, and still more preferably 20 - 70 weight %, and most preferably 25 - 65 weight %, based on the weight of the cement. If this proportion falls short of 10 weight %, the shortage will possibly result in preventing the components from being blended enough to be molded satisfactorily in a prescribed shape and lowering the strength of the molded mass . If the proportion exceeds 80 weight %, the excess will possibly result in lowering the strength of the hardened mass of the cement composition.

When the cement composition is used as mortar or concrete, the sand and gravels formulated in the cement composition is not particularly restricted but may be arbitrarily selected from those that have been used in the known cement compositions. As examples of the sand and gravels, natural fine aggregates such as river sand, sea sand, and mountain sand which are formed by the natural action from rock; artificial fine aggregates obtained by pulverizing such rock or slag; and light-weight fine aggregates may be cited. The amount of the sand to be formulated is not particularly restricted but is only required to be the same as in the known cement composition. Further, the amount of the gravels to be formulated is also not particularly restricted but is only required to be the same as in the known cement composition. The sand-total aggregate ratio, for example, is preferably in the range of 20- 60 weight % and more preferably 30 - 50 weight %. If this ratio falls short of 20 weight %, the shortage will possibly compel the cement composition to produce a concrete of coarse surface and, in a concrete of a large slump, tend to induce separation of coarse aggregates and mortar component. If the ratio exceeds 60 weight %, the excess will possibly require increasing the unit amount of cement and the unit amount of water and impart inferior fluidity to the concrete.

The cement composition may optionally include other materials. The other materials is not particularly restricted but is only required to be the same as in the known cement composition. As concrete examples of the other materials, silica fume, blast furnace slag, silica powder, and fibrous materials such as steel fibers and glass fibers may be cited. The amount of such other materials to be formulated is not particularly restricted but is only required to be the same as in the known cement composition.

The method for manufacturing the cement composition is not particularly restricted. As concrete examples of this method, the same method as used for the conventional cement composition, namely the method which comprises adding the cement additives or the aqueous solution or the aqueous dispersion thereof while blending cement and water optionally with other materials and then blending them altogether; the method which comprises preparatorily blending cement and water optionally with other material, adding the cement additives or the aqueous dispersion or the aqueous solution thereof to the resultant mixture, and blending them altogether; the method which comprises preparatorily blending cement and other materials required optionally, adding the cement additives or the aqueous dispersion or the aqueous solution thereof and water to the resultant mixture, and blending them altogether; and the method which comprises preparatorily blending cement, the cement additives or the aqueous dispersion or the aqueous solution thereof, and optionally other materials, adding water to the resultant mixture, and blending them altogether may be cited.

The cement composition mentioned above yields a hardened mass which excels in strength and durability and, therefore, contributes for exalting the safety of the building and repressing the cost of repair. The cement composition mentioned above can be widely used advantageously in various fields of civil engineering and building construction. This cement composition also constitutes one of the preferred embodiments of the present invention.

### EXAMPLES

Now, the present invention will be described more specifically below by adducing working examples. It should be noted, however, that the present invention is not limited to these working examples. The "part" and "%" used in the working examples respectively mean "part by weight" and "% by weight" unless otherwise specified.

(Measuring method of solids content) The solids content of a given substance was calculated by analyzing a sample of this substance for the non-volatile residue. This non-volatile residue was measured by accurately weighing out about 1 g of the sample, keeping the sample for one hour in a drier under a nitrogen atmosphere at 130°C, allowing the sample to cool, and weighing the cooled sample accurately.

First, the polymer component was prepared by the following method.

(Synthetic Example 1) In a glass reaction vessel provided with a thermometer, a stirrer, a nitrogen inlet tube, and a reflux condenser, 370.0 parts of a polyoxyethylene (12)-polyoxypropylene (12) -butyl ether copolymer having an average molecular weight of 1,340 (the numerals in the parentheses represent the numbers of mols of average addition) (made by Sanyo Kasei K.K. and sold under the trademark designation of "New Pole 50HB-400") and 15.6 parts of maleic acid were placed and heated to 120 ± 5°C under a stream of nitrogen till they were melted and mixed. Then, while the resultant mixture was kept at 120 ± 5°C, 14.4 parts of acrylic acid and 2.5 parts of di-tert-butyl peroxide (made by Nippon Oils & Fats Co., Ltd. and sold under the trademark designation of "Perbutyl D") were separately added thereto dropwise continuously over a period of one hour. The components in the reaction vessel were thereafter stirred continuously for one hour as kept at 120 ± 5°C to obtain a graft polymer 1.

An aqueous sodium salt solution of the graft polymer 1 was obtained by adding 333.5 parts of water and 12.6 parts of an aqueous sodium hydroxide solution (30% solution) to 108.7 parts of the graft polymer 1. The produced aqueous solution was designated as "additive 1." The additive 1 thus obtained was a light yellow transparent solution having a pH value of 6.6 and a solids content of 23.8%. This solution was not separated for at least one month at room temperature.

(Synthetic Example 2) In a glass reaction vessel provided with a thermometer, a stirrer, a nitrogen inlet tube, and a reflux condenser, 160.0 parts of a polyoxyethylene-polyoxypropylene random copolymer (Aldrich reagent having an average molecular weight of 3,900) was placed and heated to 145 ± 5°C under a stream of nitrogen. Then, while the resultant solution was kept at 145 ± 5°C, 40.0 parts of acrylic acid and 2.0 parts of tert-butyl perbenzoate (made by Nippon Oils & Fats Co., Ltd. and sold under the trademark designation of "Perbutyl Z") were separately added thereto dropwise continuously over a period of one hour. The components in the reaction vessel were thereafter stirred continuously for one hour as kept at 145 ± 5°C to obtain a graft polymer 2.

An aqueous sodium salt solution of the graft polymer 2 was obtained by adding 238.1 parts of water and 31.0 parts of an aqueous sodium hydroxide solution (30% solution) to 110.0 parts of the graft polymer 2. The produced aqueous solution was designated as "additive 2." The additive 2 obtained was a colorless transparent solution having a pH value of 6.6 and a solids content of 26.1%.

(Synthetic Example 3) In a glass reaction vessel provided with a thermometer, a stirrer, a nitrogen inlet tube, and a reflux condenser, 185.0 parts of "New Pole 50HB-400" was placed and heated to 120 ± 5°C under a stream of nitrogen. Then, while the resultant solution was kept at 120 ± 5°C, 15.0 parts of acrylic acid and 1.6 parts of "Perbutyl D" were separately added thereto dropwise continuously over a period of one hour. The components in the reaction vessel were thereafter stirred continuously for one hour as kept at 120 ± 5°C to obtain a graft polymer 3.

An aqueous sodium salt solution of the graft polymer 3 was obtained by adding 270.2 parts of water and 12.2 parts of an aqueous sodium hydroxide solution (30% solution) to 111.9 parts of the graft polymer 3. The produced aqueous solution was designated as "additive3." The additive 3 obtained was a colorless transparent solution having a pH value of 6.6 and a solids content of 27.6%.

(Synthetic Example 4) In a glass reaction vessel provided with a thermometer, a stirrer, a nitrogen inlet tube, and a reflux condenser, 160.0 parts of a polyoxyethylene-polyoxypropylene-polyoxyethylene block copolymer (Aldrich reagent having an average molecular weight of 4,400) was placed and heated to 145 ± 5°C under a stream of nitrogen. Then, while the resultant solution was kept at 145 ± 5°C, 40.0 parts of acrylic acid and 2.0 parts of "Perbutyl Z" were separately added dropwise continuously over a period of one hour. The components in the reaction vessel were thereafter stirred continuously for one hour as kept at 145 ± 5°C to obtain a graft polymer 4.

When water and an aqueous 30% sodium hydroxide solution were added for the purpose of obtaining the sodium hydroxide salt of the graft polymer 4, the occurrence of a component insoluble in water was confirmed. Thus, the filtrate obtained by filtering the resultant mixture was designated as "additive 4." The additive thus obtained was a colorless transparent solution having a pH of 6.8 and a solids content of 8.8%.

A mortar was kneaded in the presence of an additive obtained as described above, a compound shown below, and an air-entraining agent. And the mortar was evaluated for air content and spacing factor.

The compounds and the air-entraining agents used for the kneading were as shown below.

### (Compounds used)

Compound 1: PO/EO/PO block copolymer, PO/EO ratio = 75/25 (mol %), average addition number = 57 mols.
Compound 2: EO/PO/EO block copolymer, PO/EO ratio = 86/14 (mol%), average addition number = 35 mols.
Compound 3: 2,4,7,9-Tetramethyl-5-decyne-4,7-di(polyoxyethylene (n = 1.3 mols) ether
Compound 4: CH₃O-(AO)ₙ-CH₂CH(CH₃)NH₂, (AO):block polymer of oxyalkylenes having 2 and 3 carbon atoms, average number of n = 34
Compound 5: Polyoxypropylene butyl ether, average addition number of oxypropylene = 40 mols.
Compound 6: Polypropylene glycol, average addition number = 68 mols.
Compound 7: C₁₈H₃₇O-(AO)ₙ-H, (AO): Block polymer of oxyalkylenes having 2 and 3 carbon atoms respectively, average number of n = 38
(air-entraining agent) Modified alkylcaraboxylic acid compound type anionic surfactants (made by NMB Corp. and sold under the trademark designations of "Microair 775S").

The kneading of mortar was carried out as follows.

(Kneading of mortar) In a mortar mixer (made by Hobart Corp. and sold under the trademark designation of Hobart Morar Mixer N-50), 213.7 g of what was obtained by weighing out an additive, a compound, and an air-entraining agent in prescribed amounts indicated in Table 1 or Table 3, mixing them, and diluting the resultant mixture with water, 485.7 g of ordinary portland cement made by Taiheiyo Cement K.K., and 1350 g of standard sand for testing cement strength (specified in Subparagraph 5.1.3, Annex 2 to JIS R5201-1997) were kneaded in accordance with the procedure specified in JIS R5201-1997. Since the spacing factor is easily affected by the amount of entrained air into the hydraulic material composition, the amount of air found when the additive 1 was used alone was adopted as the target amount of air of the mortar under test and the compound and the air-entraining agent were adjusted. When the additive 2 and the additive 4 requiring the relevant acids to be used in large amounts during the course of grafting were added in the same amounts as the additive 1 and the additive 3, they induced segregation of the materials. Thus, they were added in one half of their amounts for the evaluation.

The evaluation of mortar was carried out as follows.

(Measurement of amount of air and spacing factor) The mortar prepared as described above was analyzed to measure the amount of air in accordance with the method conforming to JIS A 1174. The sample mortar, after being confirmed to have a stated air content, was tested with an instrument (made by German Instruments Corp. and sold under the trademark designation of "Air Void Analyzer (AVA)") to measure the spacing factor. The determination is outlined below.

(Measurement of spacing factor) The measuring column was filled with 250 ml of a solution for the measurement of AVA adjusted in advance to 20°C and about 2000 ml of water and then a sample, 20 ml, of the mortar was injected into the bottom part of the column. After the injection, the mortar was stirred for 30 seconds to induce thorough emission of the entrained air of the mortar in the solution. The spacing factor was calculated by measuring the released air bubbles along the course of time. For the calculation of the spacing factor, the numerical value obtained by subtracting the volume occupied by aggregates measuring not less than 6 mm from the total volume of concrete (volume ratio of mortar) was taken as 100%.

### <Examples 1 - 8 and Comparative Examples 1 - 6>

Mortars were prepared by severally kneading additives, compounds, and air-entraining agents(AE agent) in the ratios shown in Table 1.

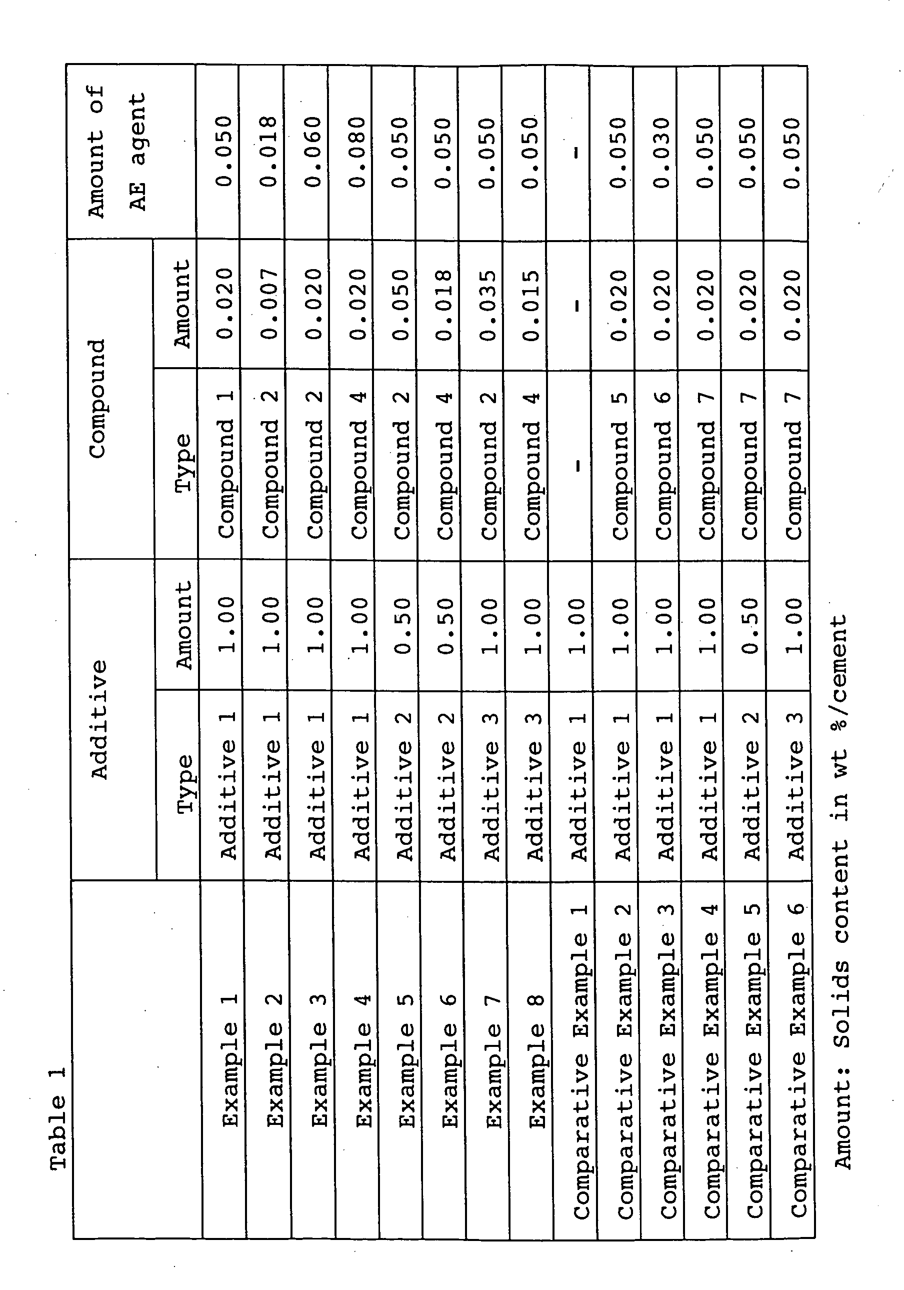

(Test results) The results of the test of fresh mortar for air content and spacing factor are shown in Table 2. The data show that the mortars allowed the entrained air therein to be dispersed finely and densely and that they were judged to excel in the freeze/thaw durability in proportion as the numerical values decreased.

**Table 2**

| | Properties of fresh mortar | |
|---|---|---|
| | Amount of air (vol. %) | Spacing factor (µm) |
| Example 1 | 8.1 | 300 |
| Example 2 | 7.6 | 291 |
| Example 3 | 8.2 | 228 |
| Example 4 | 7.2 | 333 |
| Example 5 | 6.9 | 227 |
| Example 6 | 7.6 | 300 |
| Example 7 | 6.6 | 234 |
| Example 8 | 6.5 | 220 |
| Comparative Example 1 | 7.0 | 402 |
| Comparative Example 2 | 7.1 | 389 |
| Comparative Example 3 | 8.3 | 416 |
| Comparative Example 4 | 7.2 | 374 |
| Comparative Example 5 | 6.9 | 365 |
| Comparative Example 6 | 6.0 | 448 |

From the results of Table 2, it may be concluded that when the additive 1 was used alone, the spacing factor was large while the air could be entrained into the mortar in a fixed amount. Thus, it may be fair to conclude that the quality of the air entrained into the mortar was inferior. When the combinations shown in the comparative examples were used, the spacing factors were similarly large though the air could be entrained in a fixed amount. It is, therefore, fair to conclude that the air entrained into the mortar was inferior in quality. In contrast, in the combinations shown in the working examples, when the additive 1 was used alone, the amount of air was kept constant and the spacing factor was small. It is, therefore, fair to conclude that the air entrained into the mortar was in the form of minute particles of fine quality. From the results, the present invention can contributes to improvement of the mortar in the freeze/thaw durability. These results apply to all the additives, 1 - 3.

### <Examples 9 - 11 and Comparative Examples 7 and 8>

Compound 3 was invariably used in all the experiments involved here and the additives were varied. The amounts of the additive, compound, and air-entraining agent to be incorporated were as shown in Table 3. The test results are shown in Table 4.

**Table 3**

| | Additive | | Compound | | Amount of |
|---|---|---|---|---|---|
| | Type | Amount | Type | Amount | AE agent |
| Example 9 | Additive 1 | 1.00 | Compound 3 | 0.015 | 0.018 |
| Example 10 | Additive 1 | 1.00 | Compound 3 | 0.020 | 0.050 |
| Example 11 | Additive 3 | 1.00 | Compound 3 | 0.040 | 0.050 |
| Comparative Example 7 | Additive 2 | 0.50 | Compound 3 | 0.042 | 0.050 |
| Comparative Example 8 | Additive 4 | 0.50 | Compound 3 | 0.065 | 0.050 |
| Amount: Solids content in wt %/cement | | | | | |

**Table 4**

| | Properties of fresh mortar | |
|---|---|---|
| | Amount of air (vol. %) | Spacing factor (µm) |
| Example 9 | 7.8 | 249 |
| Example 10 | 7.9 | 245 |
| Example 11 | 6.8 | 217 |
| Comparative Example 7 | 8.5 | 360 |
| Comparative Example 8 | 8.6 | 381 |

The results of Table 4 indicate that when the compound 3 and the additive 1 or 3 were combined, the air could be entrained in a fixed amount and the spacing factor was small. In contrast, when the graft polymer using a copolymer having a main chain polymer formed solely of ethylene oxide and propylene oxide was used as an additive and used in combination with the compound 3 as in Comparative Examples 7 or 8, the spacing factor was large. From these results, it is inferred that when the compound of the type of Compound 3 was used as an admixture, the additive equivalent to Component (C) defined in the present specification used in combination therewith was effective as described above.

## Claims

1. An admixture composition for hydraulic material containing component (A) and component (B) as essential components:
Component (A): A polyoxyalkylene polymer possessing a side chain containing a carboxylic group
Component (B): A compound represented by the general formula (B-1) or (B-2)
HO-(WO)ₚ-H (B-1) 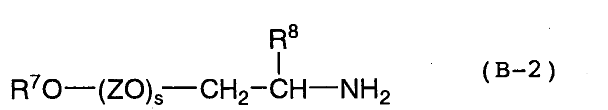
[wherein WO denotes an oxyalkylene group comprising an oxyethylene (EO) and an oxypropylene (PO) at an EO/PO molar ratio in the range of 95/5 - 5/95, p denotes a numeral in the range of 15 - 200, ZO denotes an oxyalkylene group comprising an oxyethylene (EO) and an oxypropylene (PO) at an EO/PO molar ratio in the range of 95/5 - 0/100, R⁷ and R⁸ identically denote a hydrogen atom or an alkyl group having 1 - 3 carbon atoms, and s denotes a numeral in the range of 5 - 200.]

2. An admixture composition for hydraulic material according to claim 1, wherein the polyoxyalkylene polymer possessing a side chain containing a carboxyl group contains a repeating unit represented by the following general formula (1): 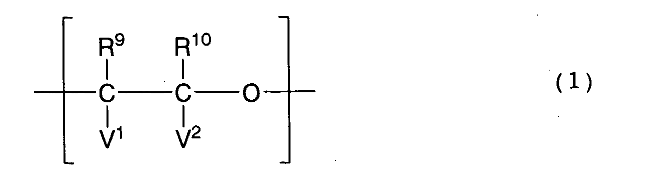 (wherein R⁹ and R¹⁰ independently denote a hydrogen atom, a hydrocarbon group having 1 - 18 carbon atoms, or a side chain containing a carboxyl group, and V¹ and V² independently denote a hydrogen atom or a side chain containing a carboxyl group; and the side chain containing a carboxyl group possesses a structure formed by the polymerization of an ethylenically unsaturated monomer component containing an unsaturated carboxylic acid type monomer)
and the repeating unit essentially possesses a side chain containing a carboxyl group.

3. An admixture composition for hydraulic material containing Component (C) and Component (D) as essential components:
Component (C): At least one polymer selected from the group consisting of (c-1) a polymer with a structure having one oxyalkylene chain possessing a side chain containing a carboxylic group linked to the residue of a compound having 2 - 30 carbon atoms and possessing one active hydrogen atom, (c-2) a polymer with a structure having at least one oxyalkylene chain possessing a side chain containing a carboxyl group linked to the residue of a compound having 4 - 30 carbon atoms and possessing two active hydrogen atoms, (c-3) a polymer with a structure having at least one oxyalkylene chain possessing a side chain containing a carboxyl group linked to the residue of a compound having 1 - 30 carbon atoms and possessing 3 or more active hydrogen atoms, and (c-4) a polymer with a structure having at least one oxyalkylene chain possessing a side chain containing a carboxylic group linked to the residue of an amine.
Component (D): A compound represented by the following general formula (B-3). 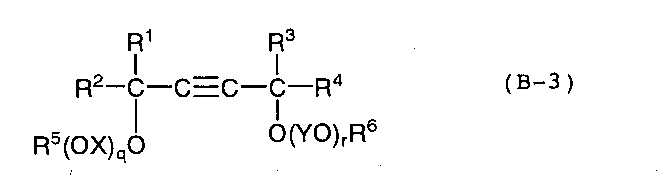 [wherein R¹ - R⁶ identically denote a hydrogen atom or an alkyl group having 1 - 10 carbon atoms, X and Y identically denote an alkylene group having 2 - 5 carbon atoms, and q and r independently denote a numeral in the range of 0 - 20.]

4. An admixture composition for hydraulic material according to claim 3, wherein the polyoxyalkylene polymer possessing a side chain containing a carboxyl group contains a repeating unit represented by the following general formula (1): 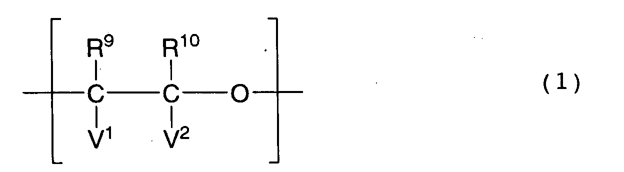 (wherein R⁹ and R¹⁰ independently denote a hydrogen atom, a hydrocarbon group having 1 - 18 carbon atoms, or a side chain containing a carboxyl group, and V¹ and V² independently denote a hydrogen atom or a side chain containing a carboxyl group; and the side chain containing a carboxyl group possesses a structure formed by the polymerization of an ethylenically unsaturated monomer component containing an unsaturated carboxylic acid type monomer)
and the repeating unit essentially possesses a side chain containing a carboxyl group.

5. An admixture composition for hydraulic material according to any one of claim 1 - 4, which further comprises an air-entraining agent.

6. An admixture composition for hydraulic material according to any one of claim 1 - 5, which further comprises a water-reducing admixture.

7. An admixture composition for hydraulic material according to claim 2 or claim 4, wherein the ethylenically unsaturated monomer component contains an α,β-unsaturated dicarboxylic acid type monomer and/or an anhydride thereof, and (meth)acrylic acid as essential components.
